(19)

Europäisches Patentamt

European Patent Office

Office européen des brevets

(11) **EP 3 082 100 A1**

(12) **EUROPEAN PATENT APPLICATION**
published in accordance with Art. 153(4) EPC

(43) Date of publication:
**19.10.2016 Bulletin 2016/42**

(21) Application number: **13898957.9**

(22) Date of filing: **09.12.2013**

(51) Int Cl.:
*G06Q 50/32* (2012.01)    *H04W 8/18* (2009.01)

(86) International application number:
**PCT/ES2013/070857**

(87) International publication number:
**WO 2015/086860 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.**
**28013 Madrid (ES)**

(72) Inventors:
• **ARMENTA LOPEZ DE VICUÑA, Ana**
**E-28013 Madrid (ES)**

• **CANALES GONZALEZ, Arturo**
**E-28013 Madrid (ES)**
• **PELLÓN GÓMEZ-CALCERRADA, Rafael**
**E-28013 Madrid (ES)**
• **CALVO CARRASCO, Patricia**
**E-28013 Madrid (ES)**
• **FERRERAS DE LA FUENTE, Susana**
**E-28013 Madrid (ES)**

(74) Representative: **Herrero & Asociados, S.L.**
**Alcalá 35**
**28014 Madrid (ES)**

(54) **METHOD AND SYSTEM FOR CHARACTERISING A USER GROUP**

(57)    Present invention refers to a method for characterizing a group of users, related among them by their mobile communication data, according to web navigation data. The method comprises: building a social graph from the mobile communication data of a user and his contacts; extracting web navigation data of each user of the social graph; associating to each edge linking two users of the social graph, web navigation data extracted for both two users; obtaining a measure of harmony based on comparing web navigation data of both two users; and providing a set of metrics for the group of users based on the measures of harmony, characterizing the group of users.

**FIG. 1**

**Description**

## TECHNICAL FIELD OF THE INVENTION

Present invention generally relates to the use of Internet, web navigation data and mobile communications of users associated among them in order to characterize different groups of users and interests shared by them.

## BACKGROUND OF THE INVENTION

Nowadays, the study of social networks and the relationships among their users are at their peak. The growth that are experimenting in modern society, make them becoming a key technique with impact in every field.

Although social network analysis (SNA) is commonly tied to online networks (as Facebook or LinkedIn), associations can be done based on multiple type of relationships. For example these networks may be built according to the mobile usage among their members. SNA is characterized by graphs: nodes that represent participants and links or edges that show the presence and intensity of the social interaction.

The individual web profiling has also been an issue of interest in the prior art. Individual interests for customers who use web navigation may be useful to approach the main features in their profiles. Some data referring to web content are extracted by means of different algorithms classifying interests according to the extracted data.

The relationship among the users may be useful for profiling purposes. Then, groups or communities sharing some features are interesting to be found. Community detection in massive social networks is already solved in the prior art. The application WO 2012004425 A1, from 2010, explains the concept of community detection with a cumulative approach. It uses a flexible and efficient method for detecting overlapping communities, since an individual may have different social circles. According to this, communities will be constructed iteratively, from basic groups to high-level communities until the algorithm converges.

However, finding cohesive communities of interest, with members closely related, is a complex problem which there is not a proper solution yet, because existing alternatives are too weak and present some gaps.

On one hand, SNA algorithms are prepared to obtain groups of individuals with high relation between them but not very homogeneous in terms of age, status, interests... This will make more difficult to use these communities in targeted actions due to the differences in their characteristics.

By the other hand, communities created from web navigation are developed from a common interest in a specific domain or group of domains, as it is learned from the document "Dynamic online communities" US 20120158637 A1, 2012. Using this approach, it is possible to build groups that share interests but they may be totally disconnected, having no relationship among members. It will difficult a lot the spread of the information through the network and, depending on the purpose, the groups may be almost useless.

Community profiling and the characterization of groups of users is usually addressed from a single point of view, becoming a restricted solution in a very specific situation. Thus, community profiling just based on web navigation shows some gaps because it can create very homogeneous communities with common interests, but this communities will not be formed by close people. In the other hand, there have also been created communities based on closeness and relations among people who has not common interests at all.

For all the reasons exposed before, it is missing in the prior art a method coming to solve this situation with the construction of singular communities, made by individuals related among them and who also share common interests.

## SUMMARY OF THE INVENTION

Present invention solves the aforementioned problems improving the community creation process based on social interactions and characterizing it with the web browsing behavior within the community. For a given "phone usage community" (understanding a community as a group of users related among them by their mobile communications), present invention assumes that it might be interesting to know the different kind of browsing interests present in the group of users, even if the group is not homogeneous in terms of interests, as that browsing interest heterogeneity provides really valuable information.

The browsing interest distribution for a phone usage community could only be computed once the phone and online behaviors merge. Existing solutions are focused on building communities or profiling them, but not in creating groups based on phone-call interaction and profiling them in terms of the community web browsing behavior. So, it is presented a method for characterizing a group of users, related among them by their mobile communication data, according to web navigation data. The method comprises:

  a) building a social graph from the mobile communication data of a user and his contacts;
  b) extracting web navigation data of each user of the social graph;

c) associating to each edge linking two users of the social graph, web navigation data extracted for both two users;
d) obtaining a measure of harmony based on comparing web navigation data of both two users;
e) providing a set of metrics for the group of users based on the measures of harmony of step e), characterizing the group of users.

The mobile communications data of a user may be obtained from the call detail records of said user. Call detailed records are used in some embodiments for weighting a relation between two users of the social graph. It is a possible implementation for taking into account social interactions based on mobile communications (calls, SMS, MMS...) when building dyads (group of two nodes with an edge between them) and communities or group of users.

In one embodiment of the invention, the web navigation data of a user refer to categories of web content visited by said user.

Web navigation data of users may be obtained from provided profiles of the users. From all the information that may be gathered from a web profile of a user, the interest in certain web contents of website visited by the user is obtained to be ranked in different levels. The categories are previously set in a web content dictionary.

Optionally, the step of comparing categories between two users may further comprise defining a comparison function to rank the level of harmony between nodes:

- assigning a weight distribution according to the subcategories of each category;
- comparing each subcategory of the two users;
- providing a value of harmony as a result of the comparison: if two subcategories match, their weights are added; if they are different, their weights are subtracted; and if there is no correspondence for a subcategory in one user, the weight are ignored.

In the same way that SNA algorithms may be applied recursively to build communities from edges, the comparison function may be applied in some embodiments of the invention to extend dyads with similar users, so communities or group of users are properly constructed.

Additionally, when calculating the measure of harmony, the number of categories involved for each user may be taken into account, which may result in a different measure from a user A to a user B than from the user B to the user A. At the end, both of them are combined to offer a global measure for the relation among users A and B.

When profiling communities, or characterizing groups of users related among them, it may comprised at least one of the following metrics: number of users, number of users who browse the Internet, number of users who browse certain websites and a homogeneity degree of users belonging to the group.

The users may belong to more than one group in some embodiments of the invention.

The users may be users of a social network, further comprising using social network analysis for determining groups of users, according to one embodiment of the invention.

A second aspect of the invention refers to a system for characterizing a group of users, related among them by their mobile communication data, according to web navigation data. The system is characterized by comprising means for building a social graph from the mobile communication data of a user and his contacts; means for extracting web navigation data of each user of the social graph; means for associating to each edge linking two users of the social graph, web navigation data extracted for both two users; means for obtaining a measure of harmony based on comparing web navigation data of both users; and means for providing a set of metrics for the groups of users based on the measures of harmony of step e), characterizing the group of users.

A last aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

Existing solutions around the creation of communities just focus on one aspect, either communities with customers who socially interact or communities with common interests but not known relation between them. Present invention, joining both SNA and Webprofiling pieces gets a more precise and complete definition about the content. On one side, communities obtained from mobile communications form cohesive groups of members related among them. By the other side, the creation of interests from web navigation complements the characterization of the groups without any inference in adding or excluding nodes, just characterizing them. This avoid the problem of creating cohesive groups - in closeness or in interests - but "unreal" in the sense that they are based in one aspect, instead of multiple views.

Efficiency in community definition is significantly increased but computational cost does not suffer important effects because both input processes have been optimized and already calculated.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1.- shows a block diagram of one embodiment of the invention.
Figure 2.- shows a diagram comparing web categories according to one embodiment of the invention.

## DETAILED DESCRIPTION OF THE INVENTION

The invention describes a process for, in general terms, characterizing groups of users (profiling communities) based on social interactions and taking into account the web browsing behavior.
Social interactions - based on mobile communications (for example calls, SMS, MMS...) - are taken into consideration when building the groups and may even be used to quantify weights for the relations between users.
Individual interests per user are important for proposed invention. They are obtained from web navigation data and a categorization of webpages. Once the users are categorized, the process extends to links to compare if two nodes are sharing common interests, which result in a common profile for this dyad. Then, a comparison function would be applied to rank the level of harmony or similarity (terms "harmony" and "similarity" can be replaced one with the other along this document for the sake of clarity) between nodes. In the same way that social network analysis algorithm is applied recursively to build communities from edges or links, the comparison function would be applied here to extend dyads with similar nodes, so communities are properly constructed.

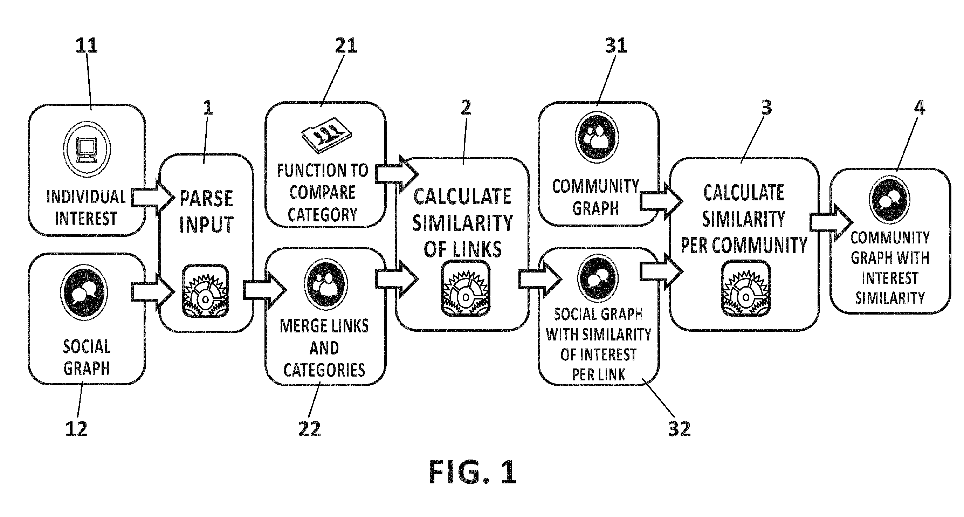

Figure 1 represents a scheme of the proposed invention according to one particular embodiment. Two different inputs are considered to be parsed in this embodiment: individual interest of users and a social graph.
- Individual interests (11): available web profiles of users are taken as an input. Any of the method proposed in the prior art may provide said user profiles. A user profile reflects the interests of the users based on their web browsing behavior. It can be taken for example, from the web logs and, based on some dictionary of categories which determines for each website what group it belongs to, computing interest profiles as a ranking of visits per user and category of web content.
A nonexclusive example of the implementation of the individual interest profile is described by means of the following table, where optional fields are included, but the main interest is focused on the field "Category", which classify the web pages visited by a user according to a dictionary of categories:

| Name | Description |
|---|---|
| User ID | It can be for example MSISDN, internal Subscriber ID or Client IP. |
| Category | The category for the URL |
| Cat Level | The category level in the hierarchical structure of the dictionary |
| Interval | It can be for example day, week, month, day of week and time slot |
| Page Views | Number of viewed pages |
| Duration | Time spent visiting URLs of that category, for example in seconds |
| Rank | User interest grade, for example: High, Medium or Low |

- Social graph: (12): the other input of this embodiment refers to a social graph. The social graph is built with the social network of mobile users and their contacts based on traffic information extracted from the call detail records (CDR's) and some basic commercial information. Present invention does not regard to the construction of the social graph as it has already been disclosed in the prior art, so present invention takes advantage of the social graph and the groups of users (communities) involved.
For example, the social graphs may be built based on a number of files with information from monthly CDRS and list of clients. For example, it could be comprised a specific case where 3 data sources should be needed, one for each type of traffic: CDR's of voice calls, SMS and MMS. It would be run periodically.
For every pair of users for which a social relationship exists, the following output is generated according to one particular embodiment:

| Name | Description |
|---|---|
| **MSISDN1** | Customer or non-customer |
| **MSISDN2** | Customer or non-customer |
| **Weight** | Measuring the strength of the relationship, for example in terms of number of communications per month |
| **Directionality** | Measuring in which direction the communication is stronger |

- Input parser (1): the two inputs of this particular embodiment (individual interests and social graph) are parsed and joined to provide the merged information as an output. The output of the input parser in this particular embodiment, results in a set of categories in which each of the nodes has a certain level of interest. Given two users defined for example as **MSISDN1 and MSISDN2,** the generated output would be like the following:

| Name | Description |
|---|---|
| **MSISDN1,MSISDN2, Weight, Directionality** | Information social graph |
| **[Categories1], [Categories2]** | All categories of the two phones |

Now the social links are characterized (22) by the categories of interest for the users, a comparing function is defined to be used for the interest harmony (2) computation:

- Function to compare categories (21): providing a measure of the harmony between two users, referring to their categories, requires defining a comparing function. In this embodiment, the output value for this function may vary from 0 to 1. For example, if it is assumed that categories may have 5 levels, the weight distribution would be as follows:

$$\text{Function} = ((1,),$$
$$(0.6, 0.4),$$
$$(0.6, 0.25, 0.15),$$
$$(0.6, 0.25, 0.10, 0.05),$$
$$(0.6, 0.25, 0.10, 0.03, 0.02))$$

Then, for every pair of users (assuming one user corresponds to one phone) and their categories, the categories are compared one to one. In every category comparison, the highest subcategory or level is extracted and the values are assigned according to it. Once this is obtained, each subcategory is compared:

- If the subcategory of both users match, the value is added;
- If there is no subcategory/level in one side, nothing happens;
- If both subcategories/levels are different, the value is subtracted.

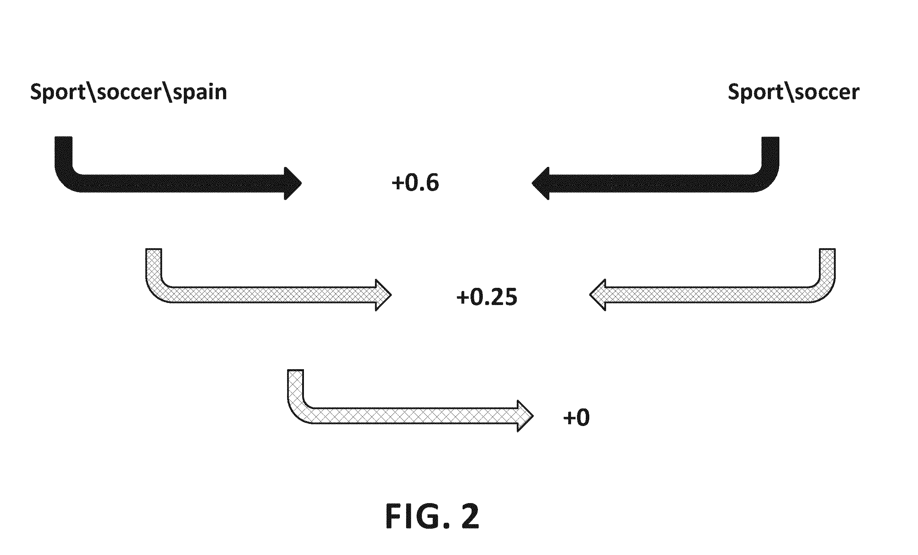

For example, if one wants to compare the categories Sports\soccer\spain and Sports\soccer, as it is graphically represented in figure 2, first category has three levels while the second one has only two, so there is a level-3 comparison and, following with the example, the level-3 values: [0.6, 0.25 and 0.15] should be used.
The interest harmony is then: 0.6+0.25=0.85.
Another example would be if the second telephone had had a third level called 'spain', so it would have matched and the interest harmony value would have been: 0.6+0.25+0.15=1
Following with the example, if its third level had been different, ('bayern'), third value would have been subtracted: 0.6+0.25-0.15=0.7
For every link it is computed at least one measure of harmony, but in some embodiments a second measure is provided because the case of asymmetric measures is considered. The interest similarity from phone A to phone B and the interest similarity from B to A may be different. These values are single values per user and they can be different because they take into account the total number of interests per user to normalize and give a weighted value according to the number of interests. A more complex similarity value will be calculated merging these two single measures.
The output (32) which is obtained in this stage is the pair or telephones (also called edge or link) with two harmony measures, from 1 to 2 and from 2 to 1. These values depend on the number of categories for each phone and they also depend on the final value for the comparison function. For every edge with some social relationship, the following output is generated according to one possible embodiment of the invention:

| Name | Description |
|---|---|
| MSISDN1, MSISDN2 | Edges |
| Weight, Directionality, Similarity12, Similarity21, {Cat11: value, Cat12: value, ...} {Cat21: value, Cat22: value, ...} | Information from social graph, all categories the phones belong to and the value of the comparison function |

The output (32) of previous stage is actually one of the inputs for the final stage of calculating the harmony per community (3). The other input is a community graph (31) which involves all the social communities which users belong to. These communities or groups of users are detected in a previous step and are already built by solutions from the prior art. These groups obtained as output may include users served by different operators because they may have some social relation regardless of the operator. Starting from the analysis of the communication between MSISDNs, links are created between them and then, using some agglomerative algorithm from prior art (for example WO 2012004425 A1), communities of related MSISDNs are obtained. For every phone number and the group of users or community it belongs to, the following output is generated according to one embodiment of the invention:

| Name | Description |
|---|---|
| MSISDN | Customer or non-customer |
| Id_com | Community Id. the user belongs to |
| Num_total | Membership strength, indicating whether the MSISDN is a strong member of the community according to its communications. |

Thus, the previous stage has provided an interest harmony measure in every pair of related users. Extending this to the communities, some metrics are obtained that indicate how similar the users of a community are. Extracting the distribution of values of interest for every group of users and these metrics, the homogeneity degree within the community is described in terms of harmony between categories. These metrics, as the number of members or the number of members who browse websites, quantify interesting features about the group of users. Thus, it is not needed an individual in-depth study to extract the relevant information, but this information is easily appreciable and measurable in terms of numeric variables.

Also, it can be considered, according to one embodiment of the invention, a community as a set of nodes which are connected among them with a specific measure of harmony. Thus, some community metrics are calculated based on the set of harmony values of the clients belonging to that community:

- Harmony: average value for harmony link values within the community
- ValueComMinWB: average value for the mínimum harmony values for every link with web browsing data
- ValueComMaxWB: average value for the maximum harmony values for every link with web browsing data
- ValueComMinTotal: average value for the mínimum harmony values for every link
- ValueComMaxTotal: average value for the maximum harmony values for every link
- Categories: number of categories visited by the community members • HarmonyMin: absolute minimum value for the minimum harmony values
- HarmonyMax: absolute maximum value for the maximum harmony values

With these measures the harmony level within the community is better understood to associate if it is obtained due to the contribution of some similar values or, on the other hand, due to some extreme values in specific nodes. This will help to understand the best approach to use for example in marketing campaigns about who to contact and how to do it.

Apart from improving the understanding, the way of present invention proposes for characterizing communities will help when filtering or selecting groups with specific features.

Finally, relevant categories are added and classified by the harmony level that users share around these categories. The group of users obtains its semantic information and will be perfectly explained in terms of web interests for its members. Thus, the output obtained is a set of metrics that explain how similar the users of the group are and what interests they have in common.

For every active member of a community, the following output is generated according to one embodiment of the invention:

| Name | Description |
|---|---|
| **Id_com** | Id community |
| **MembersCommunity, MembersWebprof, Similaritymaximum, Similarityminimum, {Catx:SUM}, {Catx:Count}** | Community information, web users of the community, similarity measures and categories |

**Claims**

1. Method for characterizing a group of users, related among them by their mobile communication data, according to web navigation data, the method comprising the steps of:

   a) building a social graph from the mobile communication data of a user and his contacts;
   b) extracting web navigation data of each user of the social graph;
   c) associating to each edge linking two users of the social graph, web navigation data extracted for both two users;
   d) obtaining a measure of harmony based on comparing web navigation data of both two users;
   e) providing a set of metrics for the group of users based on the measures of harmony of step e), characterizing the group of users.

2. Method according to claim 1 wherein the mobile communication data of a user are obtained from his call detail records.

3. Method according to any of the previous claims wherein building the social graph from mobile communication data, further comprising weighting a relation between two users according to their call detail records.

4. Method according to any of the previous claims wherein the web navigation data of a user refer to categories of web content visited by said user.

5. Method according to claim 4, wherein comparing categories between two users further comprising:

   - assigning a weight distribution according to the subcategories of each category;
   - comparing each subcategory of the two users;
   - providing a value of similarity as a result of the comparison: if two subcategories match, their weights are added; if they are different, their weights are subtracted; and if there is no correspondence for a subcategory in one user, the weight are ignored.

6. Method according to any one of the claims 4,5 wherein the measure of harmony further comprising taking into account the number of categories involved for each user, which may result in a different measure from a user A to a user B than from the user B to the user A, combining both of them to offer a global measure for the relation among users A and B.

7. Method according to any one of the previous claims wherein the set of metrics characterizing the group of users, further comprising at least one of the following: number of users, number of users who browse the Internet, number of users who browse certain websites and a homogeneity degree of users belonging to the group.

8. Method according to any one of the previous claims wherein a user belongs to more than one group.

9. Method according to any one of the previous claims, wherein the users are users of a social network, further comprising using social network analysis for determining groups of users.

10. Method according to any one the previous claims, wherein web navigation data of users are obtained from provided profiles of the users.

11. System for characterizing a group of users, related among them by their mobile communication data, according to web navigation data, the system is **characterized by** comprising means for building a social graph from the mobile communication data of a user and his contacts; means for extracting web navigation data of each user of the social graph; means for associating to each edge linking two users of the social graph, web navigation data extracted for both two users; means for obtaining a measure of harmony based on comparing web navigation data of both users; and means for providing a set of metrics for the groups of users based on the measures of harmony of step e), characterizing the group of users.

12. A computer program product comprising computer program code adapted to perform the method according to any of the claims 1-10 when said program code is executed on a computer, a digital signal processor, a field-programmable gate array, an application-specific integrated circuit, a micro-processor, a micro-controller, or any other form of programmable hardware.

**FIG. 1**

EP 3 082 100 A1

FIG. 2

## INTERNATIONAL SEARCH REPORT

| International application No. |
| --- |
| PCT/ES2013/070857 |

### A. CLASSIFICATION OF SUBJECT MATTER

*G06Q50/32* (2012.01)
*H04W8/18* (2009.01)
According to International Patent Classification (IPC) or to both national classification and IPC

### B. FIELDS SEARCHED

Minimum documentation searched (classification system followed by classification symbols)
G06Q, H04W

Documentation searched other than minimum documentation to the extent that such documents are included in the fields searched

Electronic data base consulted during the international search (name of data base and, where practicable, search terms used)

EPODOC, INVENES, WPI, INTERNET

### C. DOCUMENTS CONSIDERED TO BE RELEVANT

| Category* | Citation of document, with indication, where appropriate, of the relevant passages | Relevant to claim No. |
| --- | --- | --- |
| X | US 2006200435 A1 (FLINN STEVEN D  ET AL.) 07/09/2006, paragraph [7];  paragraphs[58 - 67]; pages 4 - 10; paragraph [156]; pages 14 - 19; paragraphs[283 - 286]; paragraphs[306 - 309]; paragraph [348]; paragraphs[391 - 396]; paragraphs[403 - 404]; claim 3, claim 6, claim 15, claims 19-20; figures 1 - 4. figures 6 - 9. figures 13 - 30. figure 45, | 1, 4, 7-12 |
| A | | 5 |
| Y | | 2-3, 6 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| 07/07/2014 | **(16/07/2014)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> J. Vazquez Burgos <br><br><br> Telephone No. 91 3495513 |

Form PCT/ISA/210 (second sheet) (July 2009)

## INTERNATIONAL SEARCH REPORT

| International application No. |
| --- |
| PCT/ES2013/070857 |

C (continuation).                    DOCUMENTS CONSIDERED TO BE RELEVANT

| Category * | Citation of documents, with indication, where appropriate, of the relevant passages | Relevant to claim No. |
| --- | --- | --- |
| Y | US 2012089996 A1 (RAMER JOREY ET AL.) 12/04/2012, paragraphs[6 - 8]; paragraphs[40 - 45]; paragraphs[55 - 64]; paragraphs[70 - 78]; paragraphs[84 - 87]; paragraphs[101 - 103]; paragraph [119]; paragraphs[123 - 124]; paragraph [127]; paragraphs[135 - 138]; paragraph [140]; paragraph [145]; paragraphs[154 - 158]; paragraphs[181 - 184]; paragraphs[195 - 197]; paragraphs[240 - 246]; paragraphs[249 - 260]; figure 1, figure 3, figure 5, figures 20 - 21. | 2-3 |
| Y | US 2012278317 A1 (SPIEGEL JOEL R) 01/11/2012, paragraph [9]; paragraph [26]; paragraphs[31 - 39]; paragraphs[44 - 48]; paragraphs[50 - 54]; paragraphs[63 - 65]; paragraphs[71 - 78]; paragraphs[86 - 89]; figure 1, figures 4 - 5. | 6 |
| A | 06/12/2013, Harispe, S. et al. "Semantic Measures for the Comparison ofUnits of Language, Concepts or Instances from Text and Knowledge Representation Analysis". Version 2. Cornell University Library. 6 of December of 2013. [on line] [retrieved the 2014-18-06]. Retrieved from Internet: <URL: http://arxiv.org/abs/1310.1285 > | 5 |
| A | 14/07/2012, Yih, Wen-tau et al. "Polarity inducing latent semantic analysis." Proceedings of the 2012 Joint Conference on Empirical Methods in Natural Language Processing and Computational Natural Language Learning. Association for Computational Linguistics, 14 of July 2012. pages 1212-1222. . [on line] [retrieved the 2014-18-06]. Retrieved from Internet: <URL: http://research.microsoft.com/pubs/166243/YihZweigPlatt%20-%20PILSA.pdf > | 5 |
| A | US 2006248091 A1 (YAMAMOTO NORIYUKI ET AL.) 02/11/2006, paragraphs[270 - 280]; figures 13 - 14. figures 16 - 30. | 5 |

Form PCT/ISA/210 (continuation of second sheet) (July 2009)

EP 3 082 100 A1

## INTERNATIONAL SEARCH REPORT

Information on patent family members

| | International application No. |
|---|---|
| | PCT/ES2013/070857 |

| Patent document cited in the search report | Publication date | Patent family member(s) | Publication date |
|---|---|---|---|
| US2006200435 A1 | 07.09.2006 | USRE44968E E1 | 24.06.2014 |
| | | USRE44967E E1 | 24.06.2014 |
| | | USRE44966E E1 | 24.06.2014 |
| | | USRE44559E E1 | 22.10.2013 |
| | | US2009144075 A1 | 04.06.2009 |
| | | US2008288354 A1 | 20.11.2008 |
| | | US2009018918 A1 | 15.01.2009 |
| | | US2008249968 A1 | 09.10.2008 |
| | | US8566263 B2 | 22.10.2013 |
| | | US2008249967 A1 | 09.10.2008 |
| | | US7860811 B2 | 28.12.2010 |
| | | US2007203872 A1 | 30.08.2007 |
| | | US8600920 B2 | 03.12.2013 |
| | | US2007156614 A1 | 05.07.2007 |
| | | US7526464 B2 | 28.04.2009 |
| | | US2007174220 A1 | 26.07.2007 |
| | | US7493294 B2 | 17.02.2009 |
| | | US7606772 B2 | 20.10.2009 |
| | | US2006200434 A1 | 07.09.2006 |
| | | US7526459 B2 | 28.04.2009 |
| | | US2006200433 A1 | 07.09.2006 |
| | | US7539652 B2 | 26.05.2009 |
| | | US2006200432 A1 | 07.09.2006 |
| | | US7526458 B2 | 28.04.2009 |
| US2012089996 A1 | 12.04.2012 | US2014181100 A1 | 26.06.2014 |
| | | US2014180825 A1 | 26.06.2014 |
| | | US2014164113 A1 | 12.06.2014 |
| | | US2014129332 A1 | 08.05.2014 |
| | | US2014122243 A1 | 01.05.2014 |
| | | US2014089089 A1 | 27.03.2014 |
| | | US2014046761 A1 | 13.02.2014 |
| | | US2014025494 A1 | 23.01.2014 |
| | | US8712395 B2 | 29.04.2014 |
| | | US2014025502 A1 | 23.01.2014 |
| | | US2014012665 A1 | 09.01.2014 |
| | | US2014012664 A1 | 09.01.2014 |
| | | US2013325610 A1 | 05.12.2013 |
| | | US2013311297 A1 | 21.11.2013 |
| | | US2013304581 A1 | 14.11.2013 |
| | | US2013297404 A1 | 07.11.2013 |
| | | US2013282482 A1 | 24.10.2013 |
| | | US8755776 B2 | 17.06.2014 |
| | | US2013282491 A1 | 24.10.2013 |
| | | US2013275209 A1 | 17.10.2013 |
| | | US8737972 B2 | 27.05.2014 |
| | | US2013275227 A1 | 17.10.2013 |
| | | US8725126 B2 | 13.05.2014 |
| | | US2013275226 A1 | 17.10.2013 |
| | | US8718617 B2 | 06.05.2014 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2013254035 A1 | 26.09.2013 |
| | | US2013246183 A1 | 19.09.2013 |
| | | US2013238424 A1 | 12.09.2013 |
| | | US8774777 B2 | 08.07.2014 |
| | | US2013238443 A1 | 12.09.2013 |
| | | US8688088 B2 | 01.04.2014 |
| | | US2013144724 A1 | 06.06.2013 |
| | | US2013144722 A1 | 06.06.2013 |
| | | US8626736 B2 | 07.01.2014 |
| | | US2013130672 A1 | 23.05.2013 |
| | | US8554192 B2 | 08.10.2013 |
| | | US2013124317 A1 | 16.05.2013 |
| | | US2013122874 A1 | 16.05.2013 |
| | | US8631018 B2 | 14.01.2014 |
| | | US2013097015 A1 | 18.04.2013 |
| | | US8615505 B2 | 24.12.2013 |
| | | US2013080447 A1 | 28.03.2013 |
| | | US8655891 B2 | 18.02.2014 |
| | | US2013055097 A1 | 28.02.2013 |
| | | US2013053005 A1 | 28.02.2013 |
| | | US8503995 B2 | 06.08.2013 |
| | | US2013066723 A1 | 14.03.2013 |
| | | US8538812 B2 | 17.09.2013 |
| | | US2013046582 A1 | 21.02.2013 |
| | | US2013012178 A1 | 10.01.2013 |
| | | US8768319 B2 | 01.07.2014 |
| | | US2012330750 A1 | 27.12.2012 |
| | | US8620285 B2 | 31.12.2013 |
| | | US2012265613 A1 | 18.10.2012 |
| | | US8484234 B2 | 09.07.2013 |
| | | US2012238255 A1 | 20.09.2012 |
| | | US8359019 B2 | 22.01.2013 |
| | | US2012239498 A1 | 20.09.2012 |
| | | US8301125 B2 | 30.10.2012 |
| | | US2012215635 A1 | 23.08.2012 |
| | | US2012209710 A1 | 16.08.2012 |
| | | US2012209709 A1 | 16.08.2012 |
| | | US2012215640 A1 | 23.08.2012 |
| | | US2012209708 A1 | 16.08.2012 |
| | | US2012209707 A1 | 16.08.2012 |
| | | US2012209706 A1 | 16.08.2012 |
| | | US2012209705 A1 | 16.08.2012 |
| | | US2012215626 A1 | 23.08.2012 |
| | | US2012215602 A1 | 23.08.2012 |
| | | US2012215612 A1 | 23.08.2012 |
| | | US2012215639 A1 | 23.08.2012 |
| | | US2012215625 A1 | 23.08.2012 |
| | | US2012215624 A1 | 23.08.2012 |
| | | US2012215623 A1 | 23.08.2012 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2012215622 A1 | 23.08.2012 |
| | | US2012173379 A1 | 05.07.2012 |
| | | US2012173378 A1 | 05.07.2012 |
| | | US2012173377 A1 | 05.07.2012 |
| | | US2012173376 A1 | 05.07.2012 |
| | | US2012173375 A1 | 05.07.2012 |
| | | US2012173374 A1 | 05.07.2012 |
| | | US2012173373 A1 | 05.07.2012 |
| | | US2012173372 A1 | 05.07.2012 |
| | | US2012173371 A1 | 05.07.2012 |
| | | US2012173370 A1 | 05.07.2012 |
| | | US2012173369 A1 | 05.07.2012 |
| | | US2012173368 A1 | 05.07.2012 |
| | | US2012173367 A1 | 05.07.2012 |
| | | US2012173366 A1 | 05.07.2012 |
| | | US2012173365 A1 | 05.07.2012 |
| | | US2012173364 A1 | 05.07.2012 |
| | | US2012179568 A1 | 12.07.2012 |
| | | US2012179567 A1 | 12.07.2012 |
| | | US2012179566 A1 | 12.07.2012 |
| | | US2012179565 A1 | 12.07.2012 |
| | | US2012179564 A1 | 12.07.2012 |
| | | US2012173363 A1 | 05.07.2012 |
| | | US2012179563 A1 | 12.07.2012 |
| | | US2012173362 A1 | 05.07.2012 |
| | | US2012173361 A1 | 05.07.2012 |
| | | US2012173360 A1 | 05.07.2012 |
| | | US2012185349 A1 | 19.07.2012 |
| | | US2012173359 A1 | 05.07.2012 |
| | | US2012179562 A1 | 12.07.2012 |
| | | US2012173358 A1 | 05.07.2012 |
| | | US2012150629 A1 | 14.06.2012 |
| | | US8296184 B2 | 23.10.2012 |
| | | US2012130812 A1 | 24.05.2012 |
| | | US8583089 B2 | 12.11.2013 |
| | | US2012130811 A1 | 24.05.2012 |
| | | US8332397 B2 | 11.12.2012 |
| | | US2012059718 A1 | 08.03.2012 |
| | | US8195513 B2 | 05.06.2012 |
| | | US2012041819 A1 | 16.02.2012 |
| | | US2012036010 A1 | 09.02.2012 |
| | | US8560537 B2 | 15.10.2013 |
| | | US2012010991 A1 | 12.01.2012 |
| | | US2012010990 A1 | 12.01.2012 |
| | | US2012010989 A1 | 12.01.2012 |
| | | US2012010988 A1 | 12.01.2012 |
| | | US2012010987 A1 | 12.01.2012 |
| | | US2012010986 A1 | 12.01.2012 |
| | | US2012016740 A1 | 19.01.2012 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2012016739 A1 | 19.01.2012 |
| | | US2012010985 A1 | 12.01.2012 |
| | | US2012010984 A1 | 12.01.2012 |
| | | US2012010983 A1 | 12.01.2012 |
| | | US2012010982 A1 | 12.01.2012 |
| | | US2012010981 A1 | 12.01.2012 |
| | | US2012010980 A1 | 12.01.2012 |
| | | US2012010979 A1 | 12.01.2012 |
| | | US2012010978 A1 | 12.01.2012 |
| | | US2012010977 A1 | 12.01.2012 |
| | | US2012010976 A1 | 12.01.2012 |
| | | US2012010975 A1 | 12.01.2012 |
| | | US2012010974 A1 | 12.01.2012 |
| | | US2012010973 A1 | 12.01.2012 |
| | | US2012010972 A1 | 12.01.2012 |
| | | US2012010971 A1 | 12.01.2012 |
| | | US2012010970 A1 | 12.01.2012 |
| | | US2012010969 A1 | 12.01.2012 |
| | | US2012010968 A1 | 12.01.2012 |
| | | US2012010967 A1 | 12.01.2012 |
| | | US2012010966 A1 | 12.01.2012 |
| | | US2012010965 A1 | 12.01.2012 |
| | | US8532634 B2 | 10.09.2013 |
| | | US2012010964 A1 | 12.01.2012 |
| | | US8489077 B2 | 16.07.2013 |
| | | US2012010963 A1 | 12.01.2012 |
| | | US8494500 B2 | 23.07.2013 |
| | | US2012010962 A1 | 12.01.2012 |
| | | US8457607 B2 | 04.06.2013 |
| | | US2012010961 A1 | 12.01.2012 |
| | | US8467774 B2 | 18.06.2013 |
| | | US2012010960 A1 | 12.01.2012 |
| | | US8463249 B2 | 11.06.2013 |
| | | US2012010959 A1 | 12.01.2012 |
| | | US8515401 B2 | 20.08.2013 |
| | | US2012010958 A1 | 12.01.2012 |
| | | US8515400 B2 | 20.08.2013 |
| | | US2012010957 A1 | 12.01.2012 |
| | | US8532633 B2 | 10.09.2013 |
| | | US2012010956 A1 | 12.01.2012 |
| | | US8433297 B2 | 30.04.2013 |
| | | US2012010955 A1 | 12.01.2012 |
| | | US8509750 B2 | 13.08.2013 |
| | | US2012010954 A1 | 12.01.2012 |
| | | US8180332 B2 | 15.05.2012 |
| | | US2012010953 A1 | 12.01.2012 |
| | | US8175585 B2 | 08.05.2012 |
| | | US2012010952 A1 | 12.01.2012 |
| | | US2012005014 A1 | 05.01.2012 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2012005013 A1 | 05.01.2012 |
| | | US2012005012 A1 | 05.01.2012 |
| | | US2012010951 A1 | 12.01.2012 |
| | | US2012010950 A1 | 12.01.2012 |
| | | US2012010949 A1 | 12.01.2012 |
| | | US2012066199 A1 | 15.03.2012 |
| | | US2012005011 A1 | 05.01.2012 |
| | | US2012005010 A1 | 05.01.2012 |
| | | US2012066198 A1 | 15.03.2012 |
| | | US2012066057 A1 | 15.03.2012 |
| | | US2012005009 A1 | 05.01.2012 |
| | | US2012005020 A1 | 05.01.2012 |
| | | US8483674 B2 | 09.07.2013 |
| | | US2012016751 A1 | 19.01.2012 |
| | | US2012016750 A1 | 19.01.2012 |
| | | US2012010948 A1 | 12.01.2012 |
| | | US2012010947 A1 | 12.01.2012 |
| | | US2012010946 A1 | 12.01.2012 |
| | | US2012005008 A1 | 05.01.2012 |
| | | US2012005007 A1 | 05.01.2012 |
| | | US2012005006 A1 | 05.01.2012 |
| | | US2012005005 A1 | 05.01.2012 |
| | | US2012005004 A1 | 05.01.2012 |
| | | US2012005003 A1 | 05.01.2012 |
| | | US2012005002 A1 | 05.01.2012 |
| | | US2012005001 A1 | 05.01.2012 |
| | | US2012005000 A1 | 05.01.2012 |
| | | US2012004999 A1 | 05.01.2012 |
| | | US2012004998 A1 | 05.01.2012 |
| | | US2012004997 A1 | 05.01.2012 |
| | | US2012004996 A1 | 05.01.2012 |
| | | US2012004995 A1 | 05.01.2012 |
| | | US2012059711 A1 | 08.03.2012 |
| | | US2012004994 A1 | 05.01.2012 |
| | | US2012004993 A1 | 05.01.2012 |
| | | US2012004992 A1 | 05.01.2012 |
| | | US2012004991 A1 | 05.01.2012 |
| | | US2012004990 A1 | 05.01.2012 |
| | | US2012004989 A1 | 05.01.2012 |
| | | US2012004988 A1 | 05.01.2012 |
| | | US2012004987 A1 | 05.01.2012 |
| | | US2012010945 A1 | 12.01.2012 |
| | | US2012004986 A1 | 05.01.2012 |
| | | US2012004985 A1 | 05.01.2012 |
| | | US2012004984 A1 | 05.01.2012 |
| | | US2011320271 A1 | 29.12.2011 |
| | | US2011320270 A1 | 29.12.2011 |
| | | US2011320269 A1 | 29.12.2011 |
| | | US2011320268 A1 | 29.12.2011 |

Form PCT/ISA/210 (patent family annex) (July 2009)

17

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2011320267 A1 | 29.12.2011 |
| | | US2011320266 A1 | 29.12.2011 |
| | | US2011320282 A1 | 29.12.2011 |
| | | US2011320265 A1 | 29.12.2011 |
| | | US2011320281 A1 | 29.12.2011 |
| | | US2011320280 A1 | 29.12.2011 |
| | | US2011320279 A1 | 29.12.2011 |
| | | US2011320264 A1 | 29.12.2011 |
| | | US8316031 B2 | 20.11.2012 |
| | | US2011313853 A1 | 22.12.2011 |
| | | US2011313862 A1 | 22.12.2011 |
| | | US2011312310 A1 | 22.12.2011 |
| | | US8483671 B2 | 09.07.2013 |
| | | US2011275393 A1 | 10.11.2011 |
| | | US8200205 B2 | 12.06.2012 |
| | | US2011258046 A1 | 20.10.2011 |
| | | US8270955 B2 | 18.09.2012 |
| | | US2011202874 A1 | 18.08.2011 |
| | | US2011177799 A1 | 21.07.2011 |
| | | US8238888 B2 | 07.08.2012 |
| | | US2011159902 A1 | 30.06.2011 |
| | | US7983662 B1 | 19.07.2011 |
| | | US2011153428 A1 | 23.06.2011 |
| | | US2011143733 A1 | 16.06.2011 |
| | | US2011145076 A1 | 16.06.2011 |
| | | US2011143731 A1 | 16.06.2011 |
| | | US2011258049 A1 | 20.10.2011 |
| | | US2011106614 A1 | 05.05.2011 |
| | | US2011029387 A1 | 03.02.2011 |
| | | US2011029378 A1 | 03.02.2011 |
| | | US8131737 B2 | 06.03.2012 |
| | | JP2011054181 A | 17.03.2011 |
| | | US2011015994 A1 | 20.01.2011 |
| | | US8351933 B2 | 08.01.2013 |
| | | US2011015993 A1 | 20.01.2011 |
| | | US8050675 B2 | 01.11.2011 |
| | | US2010293051 A1 | 18.11.2010 |
| | | US8041717 B2 | 18.10.2011 |
| | | US2010287048 A1 | 11.11.2010 |
| | | US8209344 B2 | 26.06.2012 |
| | | US2010312572 A1 | 09.12.2010 |
| | | US2010217663 A1 | 26.08.2010 |
| | | US2010211458 A1 | 19.08.2010 |
| | | US7907940 B2 | 15.03.2011 |
| | | US2010217662 A1 | 26.08.2010 |
| | | US8099434 B2 | 17.01.2012 |
| | | US2010198681 A1 | 05.08.2010 |
| | | US7970389 B2 | 28.06.2011 |
| | | US2010169179 A1 | 01.07.2010 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2010153211 A1 | 17.06.2010 |
| | | US2010153208 A1 | 17.06.2010 |
| | | US7899455 B2 | 01.03.2011 |
| | | US2010145804 A1 | 10.06.2010 |
| | | US8340666 B2 | 25.12.2012 |
| | | US2010138296 A1 | 03.06.2010 |
| | | US7865187 B2 | 04.01.2011 |
| | | US2010121705 A1 | 13.05.2010 |
| | | US2010082430 A1 | 01.04.2010 |
| | | US2010138293 A1 | 03.06.2010 |
| | | US2010094878 A1 | 15.04.2010 |
| | | US8364540 B2 | 29.01.2013 |
| | | US2010057801 A1 | 04.03.2010 |
| | | US2010076845 A1 | 25.03.2010 |
| | | US2010076994 A1 | 25.03.2010 |
| | | US2010063877 A1 | 11.03.2010 |
| | | US8302030 B2 | 30.10.2012 |
| | | US2010082431 A1 | 01.04.2010 |
| | | US8156128 B2 | 10.04.2012 |
| | | US2009234861 A1 | 17.09.2009 |
| | | US2009240586 A1 | 24.09.2009 |
| | | US8311888 B2 | 13.11.2012 |
| | | US2009240569 A1 | 24.09.2009 |
| | | US2009222329 A1 | 03.09.2009 |
| | | US2009240568 A1 | 24.09.2009 |
| | | US2009234711 A1 | 17.09.2009 |
| | | WO2009002999 A2 | 31.12.2008 |
| | | WO2009002999 A3 | 26.02.2009 |
| | | JP2010531626 A | 24.09.2010 |
| | | EP2165437 A2 | 24.03.2010 |
| | | EP2165437 A4 | 29.02.2012 |
| | | US2008242279 A1 | 02.10.2008 |
| | | KR20080066676 A | 16.07.2008 |
| | | US2008214157 A1 | 04.09.2008 |
| | | US8131271 B2 | 06.03.2012 |
| | | US2008214156 A1 | 04.09.2008 |
| | | US8195133 B2 | 05.06.2012 |
| | | US2008215623 A1 | 04.09.2008 |
| | | US2008214155 A1 | 04.09.2008 |
| | | US2009029687 A1 | 29.01.2009 |
| | | US2008214154 A1 | 04.09.2008 |
| | | US2008215557 A1 | 04.09.2008 |
| | | US2008214153 A1 | 04.09.2008 |
| | | US2008214152 A1 | 04.09.2008 |
| | | US2009234745 A1 | 17.09.2009 |
| | | US2008214162 A1 | 04.09.2008 |
| | | US8290810 B2 | 16.10.2012 |
| | | US2008214151 A1 | 04.09.2008 |
| | | US2008215429 A1 | 04.09.2008 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2008214166 A1 | 04.09.2008 |
| | | US8666376 B2 | 04.03.2014 |
| | | US2008215428 A1 | 04.09.2008 |
| | | US8660891 B2 | 25.02.2014 |
| | | US2008214150 A1 | 04.09.2008 |
| | | US2008215475 A1 | 04.09.2008 |
| | | US8027879 B2 | 27.09.2011 |
| | | US2008270220 A1 | 30.10.2008 |
| | | US2008214149 A1 | 04.09.2008 |
| | | US2008214204 A1 | 04.09.2008 |
| | | US2008214148 A1 | 04.09.2008 |
| | | WO2008052205 A2 | 02.05.2008 |
| | | WO2008052205 A3 | 19.06.2008 |
| | | JP2010508592 A | 18.03.2010 |
| | | EP2076856 A2 | 08.07.2009 |
| | | EP2076856 A4 | 01.12.2010 |
| | | US2007168354 A1 | 19.07.2007 |
| | | US2007118533 A1 | 24.05.2007 |
| | | US2007100806 A1 | 03.05.2007 |
| | | US2007100653 A1 | 03.05.2007 |
| | | US2007100652 A1 | 03.05.2007 |
| | | US2007100805 A1 | 03.05.2007 |
| | | US2007100651 A1 | 03.05.2007 |
| | | US2007100650 A1 | 03.05.2007 |
| | | US2007094042 A1 | 26.04.2007 |
| | | US7548915 B2 | 16.06.2009 |
| | | WO2007033358 A2 | 22.03.2007 |
| | | WO2007033358 A3 | 22.11.2007 |
| | | JP2009510551 A | 12.03.2009 |
| | | EP1924936 A2 | 28.05.2008 |
| | | EP1924936 A4 | 09.12.2009 |
| | | US2007060114 A1 | 15.03.2007 |
| | | US2007061246 A1 | 15.03.2007 |
| | | US2007061245 A1 | 15.03.2007 |
| | | US2007239724 A1 | 11.10.2007 |
| | | US2007073719 A1 | 29.03.2007 |
| | | US2007073718 A1 | 29.03.2007 |
| | | US2007073717 A1 | 29.03.2007 |
| | | US2007198485 A1 | 23.08.2007 |
| | | US2007061303 A1 | 15.03.2007 |
| | | US2007192294 A1 | 16.08.2007 |
| | | US2007061244 A1 | 15.03.2007 |
| | | US2008009268 A1 | 10.01.2008 |
| | | US2007288427 A1 | 13.12.2007 |
| | | US2007061198 A1 | 15.03.2007 |
| | | US2007192318 A1 | 16.08.2007 |
| | | US2007061243 A1 | 15.03.2007 |
| | | US8229914 B2 | 24.07.2012 |
| | | US2007061242 A1 | 15.03.2007 |

Form PCT/ISA/210 (patent family annex) (July 2009)

## INTERNATIONAL SEARCH REPORT

Information on patent family members

| International application No. |
| --- |
| PCT/ES2013/070857 |

| Patent document cited in the search report | Publication date | Patent family member(s) | Publication date |
| --- | --- | --- | --- |
| | | US2007061317 A1 | 15.03.2007 |
| | | US2007061247 A1 | 15.03.2007 |
| | | US2007073723 A1 | 29.03.2007 |
| | | US7676394 B2 | 09.03.2010 |
| | | US2007073722 A1 | 29.03.2007 |
| | | US2007260635 A1 | 08.11.2007 |
| | | US7912458 B2 | 22.03.2011 |
| | | US2007061336 A1 | 15.03.2007 |
| | | US7702318 B2 | 20.04.2010 |
| | | US2007061335 A1 | 15.03.2007 |
| | | US2007061211 A1 | 15.03.2007 |
| | | US2007061334 A1 | 15.03.2007 |
| | | US2007060129 A1 | 15.03.2007 |
| | | US2007061302 A1 | 15.03.2007 |
| | | US7603360 B2 | 13.10.2009 |
| | | US2007061301 A1 | 15.03.2007 |
| | | US7577665 B2 | 18.08.2009 |
| | | US2007061333 A1 | 15.03.2007 |
| | | US2007061332 A1 | 15.03.2007 |
| | | US7860871 B2 | 28.12.2010 |
| | | US2007061331 A1 | 15.03.2007 |
| | | US7752209 B2 | 06.07.2010 |
| | | US2007061300 A1 | 15.03.2007 |
| | | US7769764 B2 | 03.08.2010 |
| | | US2007060099 A1 | 15.03.2007 |
| | | US7660581 B2 | 09.02.2010 |
| | | US2007060109 A1 | 15.03.2007 |
| | | US2007061197 A1 | 15.03.2007 |
| | | US8364521 B2 | 29.01.2013 |
| | | US2007061363 A1 | 15.03.2007 |
| | | US8688671 B2 | 01.04.2014 |
| | | US2007060173 A1 | 15.03.2007 |
| | | US2007060136 A1 | 15.03.2007 |
| | | US2007061229 A1 | 15.03.2007 |
| | | US8103545 B2 | 24.01.2012 |
| | | US2007061328 A1 | 15.03.2007 |
| | | US8615719 B2 | 24.12.2013 |
| US2012278317 A1 | 01.11.2012 | US2014108427 A1 | 17.04.2014 |
| | | US8554723 B2 | 08.10.2013 |
| | | US2012047150 A1 | 23.02.2012 |
| | | US8224773 B2 | 17.07.2012 |
| | | US8060463 B1 | 15.11.2011 |
| US2006248091 A1 | 02.11.2006 | US2013179456 A1 | 11.07.2013 |
| | | US8359322 B2 | 22.01.2013 |
| | | KR20100100998 A | 15.09.2010 |
| | | KR101084503B B1 | 18.11.2011 |
| | | KR20050084264 A | 26.08.2005 |

Form PCT/ISA/210 (patent family annex) (July 2009)

## INTERNATIONAL SEARCH REPORT

Information on patent family members

International application No.

PCT/ES2013/070857

| Patent document cited in the search report | Publication date | Patent family member(s) | Publication date |
|---|---|---|---|
| | | KR101019976B B1 | 09.03.2011 |
| | | WO2004054245 A1 | 24.06.2004 |
| | | EP1571835 A1 | 07.09.2005 |
| | | EP1571835 A4 | 20.10.2010 |
| | | CN101068325 A | 07.11.2007 |
| | | CN100486310C C | 06.05.2009 |
| | | CN101068324 A | 07.11.2007 |
| | | CN101068324B B | 15.06.2011 |
| | | CN101068323 A | 07.11.2007 |
| | | CN100499761C C | 10.06.2009 |
| | | CN1736097 A | 15.02.2006 |
| | | CN100499756C C | 10.06.2009 |
| | | JP2004192460 A | 08.07.2004 |
| | | JP4161701B B2 | 08.10.2008 |
| | | JP2004194107 A | 08.07.2004 |
| | | JP4003127B B2 | 07.11.2007 |

Form PCT/ISA/210 (patent family annex) (July 2009)

**EP 3 082 100 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012004425 A1
- US 20120158637 A1